# EUROPÄISCHE PATENTANMELDUNG

(11) **EP 4 789 985 A1**
(43) Veröffentlichungstag der Anmeldung: **12.08.2026**
(21) Anmeldenummer: 26156008.0
(22) Anmeldetag: 03.02.2026
(51) Int. Cl.: B65D 90/34, B65D 90/28, B65D 90/30, B65D 90/32, B01D 53/02, B01D 53/44, B65D 88/34

(54) **SYSTEM ZUR REDUKTION VON GASFÖRMIGEN EMISSIONEN BEI ÖLTANKS**

(30) Priorität: 05.02.2025 DE 102025104247
(71) Anmelder: Deutsche Transalpine Oelleitung GmbH, 81829 München (DE)
(72) Erfinder: Weber, Harald, 85101 Lenting (DE)
(74) Vertreter: WBH Wachenhausen Patentanwälte PartG mbB

(57) **Zusammenfassung**

Die vorliegende Erfindung bezieht sich auf ein System zur Reduktion von gasförmigen Emissionen bei wenigstens einem Öltank (10) mit einem Schwimmdach (14) und einer Tankwand (12). Das System ist dazu ausgebildet, Gase aus einem durch den Öltank (10) begrenzten Volumen abzusaugen, wie aus einem Innenraum des Öltanks (10) und/oder einem in einer Randdichtungsvorrichtung (20) begrenzten Volumen.

## Beschreibung

### Technisches Gebiet

Die vorliegende Offenbarung bezieht sich auf ein System zur Reduktion von gasförmigen Emissionen bei wenigstens einem Öltank.

### Technischer Hintergrund

Öltanks dienen zur Aufbewahrung von Öl, beispielsweise bei industriellen Anlagen und Pipelines. Diese Öltanks können einen konstanten Innenraum haben. Bei dem Befüllen wird dann ein Gas verdrängt. Beim Entleeren wird dann Gas in den Innenraum eingeleitet. Solche Öltanks können beispielsweise als Festdachtanks ausgebildet sein.

Eine weitere Variante von Öltanks hat einen variablen Innenraum, welcher sich an die Menge von aufgenommenem Öl anpasst. Dabei liegt ein Schwimmdach oder eine Schwimmdecke auf dem gelagerten Öl auf. Beim Befüllen schwimmt das Schwimmdach dann auf dem Öl nach oben. Beim Entleeren senkt sich das weiterhin auf dem Öl aufliegende Schwimmdach ab. Das Schwimmdach befindet sich also in einer Position korrespondierend zu einem Pegelstand, wodurch sich der Innenraum an einen Füllstand anpasst. Dadurch existiert kein Raum, in welchem sich eine explosive Atmosphäre ausbilden kann. Zudem ist ein Emissionsverhalten von Gas bei solchen Öltanks aufgrund der fehlenden Tankatmung gering.

In der EP 2 142 281 A1 ist ein Tanksystem mit einem Schwimmdach beschrieben. Der Innenraum dieses Tanksystems weist eine Entlüftung ab. Dabei ist ein Flüssigkeitsabscheider vorgesehen, welcher eine durch eine schwallartige Gasströmung mitgerissener Flüssigkeit abscheiden kann.

Öl kann flüchtige Bestandteile aufweisen. Durch deren Ausgasen kann es zu einer Umweltbelastung kommen, beispielsweise wenn diese Gase einen Treibhauseffekt verursachen. Zudem können die entweichenden Gase einen Geruch aufweisen, welcher von Anwohnern in der Umgebung als störend empfunden werden kann. Zudem gibt es gesetzliche Vorschriften, welche gasförmige Emissionen bei Öltanks limitieren können. Bei Schwimmdachtanks kann es zu solchen Emissionen kommen, beispielsweise durch einen Gasaustritt an einer Dichtung oder beim Befüllen und Entleeren. Beispielsweise kann es bei und nach dem Entleeren zu gasförmigen Emissionen kommen, weil Öl an einem freigelegten Teil des Öltanks haften bleibt und dort ausgast.

### Darstellung der Erfindung

Ein erster Aspekt betrifft ein System zur Reduktion von gasförmigen Emissionen bei wenigstens einem Öltank. Der Öltank weist ein Schwimmdach und eine Tankwand auf. Der Öltank kann als ein Schwimmdachtank ausgebildet sein. Das Schwimmdach oder auch der Öltank kann Teil des Systems sein oder dazu separat. Das Schwimmdach kann Pontons aufweisen, mittels welchen das Schwimmdach auf Öl in einem Tankraum aufschwimmt. Der Tankraum kann ein Innenraum sein, in welchem Öl aufnehmbar ist. Der Öltank kann auch ein Festdach über dem Schwimmdach aufweisen, wobei das Schwimmdach dann auch als Schwimmdecke bezeichnet wird. Die Tankwand kann beispielsweise als zylindrische Hülse ausgebildet sein. Das Schwimmdach kann innerhalb der Tankwand in Hochrichtung beweglich angeordnet sein. Das Schwimmdach kann mit seinem radial äußeren Rand an eine Innenseite der Tankwand angrenzen. Der Öltank kann eine Bodenwand aufweisen. Die Bodenwand kann gemeinsam mit der Tankwand ausgebildet sein. Das Schwimmdach, die Tankwand und/oder die Bodenwand können jeweils als Stahlkonstruktion ausgebildet sein. Das Schwimmdach kann eine höhenverstellbare obere Begrenzung des Innenraums des Öltanks bilden. Das Schwimmdach hebt sich beim Befüllen und senkt sich beim Entleeren jeweils selbsttätig. Der Öltank kann einen oben offenen Zylinder aufweisen, welcher durch das Schwimmdach verschlossen ist. Die Tankwand kann einwandig oder doppelwandig ausgebildet sein. Bei einem im Wesentlichen entleerten Tank kann das Schwimmdach auf Stützen ruhen, welche Teil des Schwimmdachs sein können. Das Schwimmdach kann geführt sein, beispielsweise durch ein oder mehrere vertikale Führungsrohre. Die Führungsrohre können sich durch das Schwimmdach hindurch erstrecken. Eine Position des Schwimmdach kann durch einen Füllstand des Öltanks definiert sein. Eine Unterseite des Schwimmdachs kann ab einem Mindestfüllstand auf in dem Öltank aufgenommenen Öl aufliegen.

Der Öltank kann eine Zuleitung für ein Befüllen und eine Ableitung für ein Entleeren aufweisen. Die Zuleitung und die Ableitung können auch gemeinsam durch eine Leitung gebildet sein. Zwischen der Tankwand und dem Schwimmdach kann eine Randdichtungsvorrichtung vorgesehen sein. Die Randdichtungsvorrichtung kann ein Austreten von Öl seitlich an dem Schwimmdach verhindern und an der Tankwand beim Entleeren anhaftendes Öl abstreifen. Die Randdichtungsvorrichtung kann auch dazu ausgebildet sein, ein Austritt von Gasen reduzieren. Es kann eine öldichte oberirdische Lagerung des Öltanks vorgesehen sein, beispielsweise in einer Wanne aus Ton. Der Öltank kann auf dem Boden aufgestellt sein. Der Öltank kann einen Rührer aufweisen. Der Öltank kann eine Entlüftung aufweisen, beispielsweise über das Schwimmdach. Der Öltank kann eine Drainage für eine Oberseite des Schwimmdachs aufweisen, beispielsweise zum Ableiten von Wasser und Öl. Die Drainage kann einen Ölabscheider aufweisen. Das Öl kann beispielsweise Erdöl oder Rohöl sein. Das Öl kann auch ein davon raffinierter Anteil sein, wie Diesel oder Ottokraftstoff. Der Öltank kann für industrielle Anwendungen, beispielsweise bei der Zwischenlagerung bei der transalpinen Pipeline, vorgesehen sein.

Das System ist dazu ausgebildet, Gase aus einem durch den Öltank begrenzten Volumen abzusaugen. Dadurch kann verhindert werden, dass diese Gase aus dem Öltank austreten und/oder in die Umwelt gelangen. Dadurch kann eine Umweltbelastung von dem Öltank durch Schadstoffe, Klimagase und Geruch reduziert werden.

Die Gase können flüchtige Bestandteile sein, welche aus dem Öl austreten, beispielsweise bei der Lagerung und/oder bei Kontakt mit der Atmosphäre. Beispielsweise kann aus dem Öl CO₂, Methan, Ethan und Schwefelwasserstoff ausgasen, insbesondere bei Kontakt mit der Umgebungsluft oder weil entsprechende Blasen oder Gasanteile in dem Erdöl bei der Anlieferung gebunden sind und in den Öltank eingebracht werden. Die Gase können bei deren Austritt einen Geruch und sonstige Umweltbelastungen verursachen. Durch die Absaugung kann dies reduziert oder verhindert werden. Die Gasabsaugung kann den Öltank auch vor Explosionen schützen, da eine Ansammlung von brennbaren Gasen in dem begrenzten Volumen und damit ein Konzentrationsanstieg über eine untere Explosionsgrenze hinaus vermieden wird. Das System kann gegen Explosionsgefahr durch brennbare Gase geschützt sein, beispielsweise indem eine Maximalkonzentration solcher Gase durch eine entsprechende Steuerung der Absaugung und optional auch der Befüllung und Entleerung nicht überschritten wird.

Die Erfindung betrifft auch ein Verfahren zum Steuern und/oder Betreiben des Systems oder auch des gesamten Öltanks. Die Erfindung betrifft auch eine Steuervorrichtung, welche zum Durchführen dieses Verfahrens ausgebildet ist. Die Steuervorrichtung kann Teil des Systems sein. Die Steuervorrichtung kann neben dem Öltank installiert sein. Das System kann auch für eine Fernsteuerung ausgebildet sein, beispielsweise aus einer Steuerzentrale. Weitere Merkmale, Ausgestaltungen und Vorteile der Verfahren und der Steuervorrichtungen sowie des Verfahrens ergeben sich aus den anderen Aspekten, insbesondere dem System.

Das durch den Öltank begrenzte Volumen, aus welchem durch das System Gas abgesaugt werden kann, kann ein geschlossenes Volumen sein. Das Volumen kann gegenüber der Umwelt abgedichtet sein. Die Begrenzung des Volumens kann Zuleitungen und Ableitungen aufweisen, beispielsweise zur Entlüftung und/oder zum Druckausgleich. Der Öltank kann also Zugangsöffnungen zu dem Volumen aufweisen. Eine Gasaustrittsrate aus dem Volumen, beispielsweise aufgrund einer Entlüftung, kann kleiner oder gleich zu einer Absaugrate sein. Das Volumen wird beispielsweise wenigstens teilweise durch das Schwimmdach und/oder die Tankwand begrenzt sein. Das Volumen kann auch aus unterschiedlichen Teilvolumen gebildet sein, welche voneinander abgetrennt und/oder beabstandet sind. Das begrenzte Volumen kann beispielsweise ein Innenraum sein, insbesondere der für die Aufnahme und Lagerung von Öl vorgesehene Tankraum sein. Das begrenzte Volumen kann aber auch ein durch Dichtelemente im Wesentlichen eingeschlossenes Volumen sein. Das Volumen, aus welchem abgesaugt wird, kann zu dem Innenraum des Öltanks verschieden und auch davon abgetrennt sein.

In einer Ausführungsform ist es vorgesehen, dass das System eine Pumpvorrichtung aufweist. Die Pumpvorrichtung kann dazu ausgebildet sein, die Gase aus dem durch den Öltank begrenzten Volumen abzusaugen. Dafür kann die Pumpvorrichtung eine Pumpe aufweisen, beispielsweise mit im Betrieb konstantem oder einstellbaren Volumenstrom und/oder erzeugtem Druckdifferenzial. Dafür kann beispielsweise ein Schluckvolumen und/oder eine Drehzahl einstellbar sein, insbesondere durch Steuerung einer Stromversorgung. Die Pumpvorrichtung kann für einen elektrischen Betrieb ausgebildet sein. Das System kann eine Lärmschutzvorrichtung aufweisen, um eine Umgebung von durch die Pumpvorrichtung emittierten Schallemissionen abzuschirmen. Beispielsweise kann zwischen der Pumpvorrichtung und einem Siedlungsgebiet eine Lärmschutzwand aus Beton aufgestellt sein. Die Pumpvorrichtung kann neben dem Öltank auf dem Boden installiert sein, beispielsweise innerhalb der Wanne. Die Pumpvorrichtung kann mit dem durch den Tank begrenzten Volumen verbunden sein, beispielsweise mit einer an dem Öltank zu der Pumpvorrichtung geführten Absaugleitung. In Stromrichtung vor der Pumpvorrichtung kann eine Flammendurchschlagsicherung angeordnet sein, beispielsweise benachbart zu der Pumpe. Alternativ oder zusätzlich kann auch in Stromrichtung benachbart zu dem durch den Öltank begrenzten Volumen eine Flammendurchschlagsicherung angeordnet sein, beispielsweise unmittelbar an einem Absaugauslass.

Die Pumpvorrichtung kann dazu ausgebildet sein und/oder nur mit einer solchen Leistung betrieben werden, dass diese nicht das Öl aus dem Volumen und/oder dem Innenraum des Öltanks abpumpen kann. Beispielsweise verbleibt auch bei vollem Tank zwischen einer Oberkante der Tankwand und dem Schwimmdach eine Höhendifferenz von ca. 50 bis 150 cm. Zum Überwinden dieser Höhendifferenz mit einer Pumpe ist beispielsweise eine Druckdifferenz von 0,1 bis 0,2 bar notwendig. Die Pumpvorrichtung kann beispielsweise dazu ausgebildet sein, höchstens einen Differenzdruck von 0,005 bis 0,05 bar zu erzeugen. Dadurch kann sichergestellt werden, dass bei einer Leckage oder einem Öleintritt in das System aus einem sonstigen Grund nicht der Öltank entleert werden kann.

In einer Ausführungsform ist es vorgesehen, dass die Pumpvorrichtung eine Mischvorrichtung aufweist. Die Mischvorrichtung kann dazu ausgebildet sein, den abgesaugten Gasen Umgebungsluft beizumischen. Beispielsweise kann vor einem Einleiten der abgesaugten Gase in eine Filtervorrichtung und/oder vor einem Eintritt der abgesaugten Gase in die Pumpe Umgebungsluft beigemischt werden. Durch das Mischen mit Umgebungsluft kann ein Anteil an abgesaugten Gasen an einem so erzeugten Gasgemisch unter einem Schwellwert gehalten werden. Der Schwellwert kann ein bestimmter Prozentsatz einer unteren Explosionsgrenze sein, beispielsweise 50%. Dadurch kann eine Explosionsgefahr erheblich reduziert werden. Zudem kann eine Filterbelastung reduziert werden. Durch das Mischen kann auch ein Gasvolumenstrom, welcher abgesaugt wird, eingestellt werden. So kann auch bei einer Pumpe mit konstantem Volumenstrom ein aus dem Volumen abgesaugter Gasstrom eingestellt werden. Die Mischvorrichtung kann beispielsweise ein Schieberventil aufweisen, mittels welchem eine Größe einer Öffnung zu der Umgebung in einer Zuleitung zu der Pumpe eingestellt werden kann. Der Anteil an beigemischter Umgebungsluft kann manuell oder automatisch einstellbar sein. Der Anteil kann einmalig bei Inbetriebnahme festgelegt werden, je nach gelagerter Ölsorte angepasst werden und/oder in Abhängigkeit von einem sensorisch erfassten Konzentrationswert eingestellt werden. Die Öffnung kann auch in deren Größe unverstellbar sein und/oder ein Volumenstrom an beigemischter Umgebungsluft im Betrieb konstant sein. Vor der Pumpvorrichtung kann eine Flammendurchschlagsicherung angeordnet sein, beispielsweise damit ein Brand in der Pumpvorrichtung und/oder Filtervorrichtung nicht zu dem durch den Öltank begrenzten Volumen propagieren kann.

Die Pumpvorrichtung und/oder die Mischvorrichtung können entsprechend gesteuert werden, damit eine Konzentration von brennbaren Gasen und/oder abgesaugten Gasen in dem durch den Öltank begrenzten Volumen, in der Pumpvorrichtung, in jeweiligen Leitungen und/oder bei der Zuführung zu der Filtervorrichtung unterhalb eines Schwellwerts bleibt. Daneben können auch Warnsignale bei Überschreiten eines Schwellwerts ausgegeben werden und/oder eine Abschaltung erfolgen. Die Konzentration kann in den jeweiligen Stellen durch einen Sensor des Systems erfasst werden.

In einer Ausführungsform ist es vorgesehen, dass die Pumpvorrichtung eine Sensorvorrichtung aufweist. Die Sensorvorrichtung kann dazu ausgebildet sein, eine Konzentration von brennbarem Gas zu erfassen. Beispielsweise kann auch eine Konzentration von mehreren brennbaren Gasen gemeinsam oder getrennt erfasst werden. Ein entsprechender Sensor kann in Stromrichtung des abgesaugten Gases vor oder hinter der Mischvorrichtung angeordnet sein. Die Konzentration kann beispielsweise vor dem Einströmen an der Mischvorrichtung und/oder nach dem Ausströmen aus der Mischvorrichtung erfasst werden. Die Mischvorrichtung kann dazu ausgebildet sein, eine Menge an beigemischter Umgebungsluft in Abhängigkeit von der erfassten Konzentration von brennbarem Gas einzustellen. Dafür kann beispielsweise das Schieberventil mittels eines Stellmotors verstellt werden. Beispielsweise kann die Konzentration dadurch so eingestellt werden, dass kein explosionsfähiges Gasgemisch in der Pumpvorrichtung, der Filtervorrichtung oder auch insgesamt dem System entstehen kann.

In einer Ausführungsform ist es vorgesehen, dass das System eine Filtervorrichtung aufweist. Die Filtervorrichtung kann dazu ausgebildet sein, Gasanteile aus den abgesaugten Gasen zu filtrieren. Die Gasanteile können bestimmte Gasanteile sein, wie unangenehm riechende Gase, brennbare Gase und/oder umweltschädliche Gase. Beispielsweise können einige oder alle Gase ausgefiltert werden, welche von dem Öl ausgegast werden. Optional kann die Filtervorrichtung auch unerwünschte Gasanteile aus dem Gasgemisch filtern, sofern die zugemischte Umgebungslift auch solche Anteile enthält. Optional kann die Filtervorrichtung auch Festkörper, wie Staub, filtern. Beispielsweise kann die Filtervorrichtung brennbare, umweltschädliche und/oder unangenehm riechende Anteile ausfiltern. Beispielsweise kann die Filtervorrichtung als Filtermaterial Aktivkohle aufweisen. Alternativ oder zusätzlich können andere Filtermaterialien vorgesehen sein, wie ein Vlies und/oder ein Stahlfilter. Die Filtervorrichtung kann auch katalytisch arbeiten. Die Filtervorrichtung kann eine Detektiervorrichtung aufweisen, welche dazu ausgebildet ist, einen Filterbrand zu detektieren. Die Detektiervorrichtung kann beispielsweise einen CO2-Sensor, Rauchsensor und/oder Temperatursensor als Sensor aufweisen. Die Filtervorrichtung kann einen Auslass aufweisen, welcher mittels eines Auslassventils der Filtervorrichtung verschließbar ist, beispielsweise automatisch bei Detektion eines Filterbrands. Die Filtervorrichtung kann einen Einlass aufweisen, welcher mittels eines Einlassventils der Filtervorrichtung verschließbar ist, beispielsweise automatisch bei Detektion eines Filterbrands und/oder zum Austausch und Wartung.

Alternativ oder zusätzlich zu der Filtervorrichtung kann das System eine Lagervorrichtung aufweisen. In der Lagervorrichtung können die ausgefilterten Gase für einen Abtransport, eine Entsorgung und/oder eine Verwertung gelagert werden. Die Lagervorrichtung kann beispielsweise einen Gastank aufweisen.

Das System kann eine Löschvorrichtung aufweisen. Die Löschvorrichtung kann neben der Filtervorrichtung installiert sein. Die Löschvorrichtung kann für ein automatisches oder manuelles Löschen eines Filterbrands und optional eines Brands der Pumpvorrichtung ausgebildet sein. Die Löschvorrichtung kann als Löschmittel ein Inertgas, wie beispielsweise Stickstoff, und/oder ein Löschpulver aufweisen.

In einer Ausführungsform ist es vorgesehen, dass das System eine Gasübertragungsvorrichtung aufweist. Die Gasübertragungsvorrichtung kann mit dem durch den Öltank begrenzten Volumen verbunden sein. Die Gasübertragungsvorrichtung kann dazu ausgebildet sein, das abgesaugte Gas an andere Systemkomponenten zu leiten, wie beispielsweise die Mischvorrichtung, Pumpvorrichtung, die Filtervorrichtung und/oder die Lagervorrichtung. Die Gasübertragungsvorrichtung kann dazu beispielsweise Rohrleitungen und/oder flexible Schläuche aufweisen. Beispielsweise kann das durch den Öltank begrenzte Volumen mit mehreren Absaugöffnungen versehen sein, an welchen entsprechende Gasübertragungsmittel angeschlossen sind. Das Gas kann beispielsweise im Bereich des Schwimmdachs abgesaugt werden. Die Gasübertragungsvorrichtung kann beispielsweise das abgesaugte Gas zu einer Oberkante der Tankwand führen, an der Tankwand herab und dann am Boden zunächst zu der Mischvorrichtung, von dort das mit der Umgebungsluft gemischte Gas an die Pumpvorrichtung und von dort zu der Filtervorrichtung oder Lagervorrichtung. Die Gasübertragungsvorrichtung kann Ventile zum Unterbrechen des Gasstroms und Trennen der jeweiligen Komponenten aufweisen. Die Ventile können manuell bedienbar ausgebildet sein und/oder für eine Fernsteuerung. Die Ventile können einen Elektromotor und/oder einen Bedienelement, wie ein Hebel oder ein Rad, für deren Verstellung aufweisen.

In einer Ausführungsform ist es vorgesehen, dass die Gasübertragungsvorrichtung eine Drainage für Flüssigkeit aufweist. Beispielsweise kann neben aus dem Öl ausgetretenem Gas auch Flüssigkeit, wie beispielsweise Teile des Öls selbst oder eingetretenes oder in der Gasübertragungsvorrichtung kondensiertes Wasser, angesaugt werden. Die Drainage kann diese Flüssigkeit abscheiden. Dadurch kann ein Eintritt in die Pumpvorrichtung und/oder die Filtervorrichtung vermieden werden. Beispielsweise kann die Drainage eine unterseitig angeordnete Durchgangsöffnung aufweisen. Die Durchgangsöffnung kann in einer Kupplung für mehrere mit dem begrenzten Volumen verbundene Rohrleitungen, an einem tiefsten Punkt und/oder mittig auf dem Schwimmdach angeordnet sein. Die Drainage kann die Flüssigkeit zu einer Drainage für die Oberseite des Schwimmdachs leiten und/oder benachbart zu dieser Drainage angeordnet sein. Beispielsweise kann das Schwimmdach für dessen Drainage oberseitig einen Gully aufweisen. Die Drainage des Schwimmdachs kann eine Leitung nach außen zu der Tankwand, insbesondere in Bodennähe, aufweisen. Die Drainage des Schwimmdachs kann gegen Ölaustritt abgesichert sein, sodass keine separate Absicherung gegen Ölaustritt für die Drainage der Gasübertragungsvorrichtung erfolgen muss. Die Drainage des Schwimmdachs kann beispielsweise einen Sensor für Öl aufweisen und bei Erfassung von durch die Drainage abfließendem Öl die Drainage automatisch verschließen. Alternativ oder zusätzlich kann die Drainage des Schwimmdachs auch einen Ölabscheider an deren Auslass aufweisen.

In einer Ausführungsform ist es vorgesehen, dass die Gasübertragungsvorrichtung einen verformbaren Abschnitt aufweist. Der verformbare Abschnitt kann dazu ausgebildet sein, durch eine Verformung eine Distanzveränderung zwischen einer Oberkante des Öltanks und einer Oberseite des Schwimmdachs zu kompensieren. Der verformbare Abschnitt kann ein flexibler Abschnitt sein. Die Distanz kann zu einem Füllstand korrespondieren. Die Oberkante des Öltanks kann durch eine obere umlaufende Kante der Tankwand gebildet sein, welche auch als Oberkante der Tankwand bezeichnet wird. Beispielsweise kann sich ein Schlauch des verformbaren Abschnitts bei hohem Füllstand des Öltanks teilweise auf dem Schwimmdach ablegen, da dann das Schwimmdach nahe an der Oberkante angeordnet ist. Bei geringem Füllstand kann sich der Schlauch dagegen strecken und dann fast senkrecht innenseitig an der Tankwand verlaufen. Beispielsweise kann der verformbare Abschnitt durch einen expandierbaren und/oder biegeschlaffen Schlauch gebildet sein. Ansonsten kann die Gasübertragungsvorrichtung steife Rohrleitungen aufweisen. Der verformbare Abschnitt kann beispielsweise auch durch gelenkig miteinander verbundene Rohre gebildet sein. Der verformbare Abschnitt kann Stützelemente aufweisen, wie miteinander gelenkig verbundene Kettenglieder, in denen beispielsweise ein flexibler Schlauch aufgenommen ist.

In einer Ausführungsform ist es vorgesehen, dass der verformbare Abschnitt durch eine verstellbare Brücke des Öltanks, welche die Oberkante des Öltanks mit der Oberseite des Schwimmdachs verbindet, abgestützt ist. Dafür kann ein Teilbereich an der Brücke befestigt sein, beispielsweise zwischen zwei Gelenken oder Schläuchen. Die Brücke kann beispielsweise auch andere Leitungen, wie Sensorleitungen und/oder Versorgungsleitungen, aufweisen. Die Brücke kann auch für den Zugang von Personal und damit als Personenbrücke ausgebildet sein. Die Brücke kann beispielsweise einen Leiterabschnitt aufweisen. Die Personenbrücke kann durch eine Treppe an einer Außenseite der Tankwand vom Boden aus zugänglich sein. Durch die Personenbrücke kann eine Oberseite des Schwimmdachs für Wartungsarbeiten zugänglich sein. Die Personenbrücke kann einen Zugang von Personen zu der Oberseite des Schwimmdachs bereitstellen. Die Brücke kann sich selbsttätig durch das Verstellen an die Position des Schwimmdachs anpassen. Beispielsweise kann sich die Brücke bei Entleeren des Tanks nach unten verschwenken. Die Brücke kann auf dem Schwimmdach abrollen. Die Brücke kann teleskopisch längenverstellbar sein. Durch das seitliche Abstützen kann der verformbare Abschnitt gestützt werden. Durch das seitliche Abstützen kann der verformbare Abschnitt vor unerwünschten Verformungen geschützt werden. Der verformbare Abschnitt kann wenigstens teilweise an der Brücke gehalten sein.

In einer Ausführungsform ist es vorgesehen, dass das System dazu ausgebildet ist, gasförmige Emissionen bei wenigstens einem ersten Öltank mit Schwimmdach und einem zweiten Öltank mit Schwimmdach zu reduzieren. Beide Öltanks können jeweils eine Tankwand aufweisen. Beispielsweise kann die Filtervorrichtung und/oder Pumpvorrichtung ausreichend dimensioniert sein, um auch bei zwei Öltanks die Absaugung zu verursachen. Durch eine zentrale Bauweise können so Kosten gespart werden. Zudem ist es sehr unwahrscheinlich, dass beide Öltanks gleichzeitig deren Füllstand ändern. Meist ist die Absaugung nur bei einer Füllstandsänderung erforderlich. Die Gasübertragungsvorrichtung kann beispielsweise zwei oder mehr Öltanks mit einer zentralen Mischvorrichtung, zentralen Pumpvorrichtung und/oder zentralen Filtervorrichtung verbinden. Beispielsweise kann nur eine Füllstandsänderung von einer bestimmten Anzahl an so für die Absaugung angebundenen Öltanks erlaubt werden, wie beispielsweise nur eines einzigen Öltanks. Dann kann die Filtervorrichtung und/oder Pumpvorrichtung nur ausreichend dimensioniert sein, um bei einem einzigen Öltank die Absaugung zu verursachen. Bei einer höheren Anzahl angeschlossener Tanks kann die Filtervorrichtung und/oder Pumpvorrichtung auch ausreichend für die Absaugung mehrere angeschlossener Öltanks aber nicht die Absaugung bei allen angeschlossenen Öltanks dimensioniert sein.

In einer Ausführungsform ist es vorgesehen, dass der Öltank eine Randdichtungsvorrichtung zwischen dem Schwimmdach und der Tankwand aufweist. Die Randdichtung kann beispielsweise radial zwischen dem Schwimmdach und der Tankwand abdichten. Die Randdichtungsvorrichtung kann wenigstens eine erste Dichtung und eine zweite Dichtung aufweisen. Das durch den Öltank begrenzte Volumen kann zwischen der ersten und der zweiten Dichtung ausgebildet sein. Das durch den Öltank begrenzte Volumen, aus welchem abgesaugt wird, kann als ein inneres Volumen der Randdichtungsvorrichtung ausgebildet sein. Die beiden Dichtungen können in Hochrichtung voneinander beabstandet sein und an einem Außenumfang des Schwimmdachs umlaufen. Alle Dichtungen können einen umlaufenden Ring radial zwischen dem Schwimmdach und der Tankwand ausbilden. Zwischen den Dichtungen kann sich Öl ansammeln, wodurch dann eine Ausgasung stattfinden kann. Durch die dortige Absaugung kann dann ein Austritt in die Umwelt verhindert oder zumindest reduziert werden.

Die Randdichtung kann eine primäre Dichtung aufweisen. Die primäre Dichtung kann ein Gleitblech aufweisen, welches an der Innenseite der Tankwand anliegt. Bei einem Entleeren gleitet dieses Gleitblech an der Innnenwand ab und streift so anhaftendes Öl ab. Das Gleitblech kann an der Tankwand zugewandten Seite mit Gummi beschichtet sein. Die primäre Dichtung kann eine Dichtungsschürze aufweisen, welche zwischen dem Gleitblech und dem Schwimmdach eine abdichtende flexible Verbindung ausbildet. Das Gleitblech kann sich in Hochrichtung an einem Abschnitt der Tankwand und in Umfangsrichtung komplett an der Tankwand entlang erstrecken. Das Gleitblech kann radial beweglich und/oder federnd an dem Schwimmdach befestigt sein, um Achsabweichungen zu kompensieren. Die Randdichtung kann eine sekundäre Dichtung aufweisen, welche oberseitig an dem Gleitblech befestigt ist. Die sekundäre Dichtung kann eine Gummilippe aufweisen, welche durch das Gleitblech nicht erfasstes Öl ebenfalls von der Tankwand abstreift. Die Randdichtung kann eine tertiäre Dichtung aufweisen. Die tertiäre Dichtung kann an der Oberseite des Schwimmdachs befestigt sein und ebenfalls an der Tankwand anliegen. Die tertiäre Dichtung kann eine Dichtungsschürze aufweisen, welche durch das Gleitblech und die sekundäre Dichtung nicht erfasstes Öl ebenfalls von der Tankwand abstreift. Die tertiäre Dichtung ist beispielsweise in Hochrichtung von der sekundären Dichtung 5 bis 30 cm beabstandet, insbesondere 15 bis 20 cm. Oberhalb der tertiären Dichtung kann die Tankwand freiliegen und der Öltank kein Volumen mehr begrenzen. Nicht beim Entleeren abgestriffenes Öl ist dort in Kontakt mit der Atmosphäre und kann dort gasförmige Emissionen freisetzen. Trotz einer solchen dreifachen Abdichtung verbleiben üblicherweise Ölreste an der Innenseite der Tankwand bei einem Entleeren, beispielsweise aufgrund von Korrosionen an der Innenseite der Tankwand. Nach dem Passieren der primären oder auch erst nach Passieren der sekundären Dichtung gerät das noch an der Tankwand anhaftende restliche Öl mit Luft in Kontakt. Dadurch beginnt ein Ausgasungsprozess. Die so entstehenden gasförmigen Emissionen sind dabei aber noch zwischen den Dichtungen gefangen, insbesondere durch die Abdeckung aufgrund der tertiären Dichtung. Entsprechend kann hier eine Absaugung erfolgen, um Umweltbeeinträchtigungen und auch eine explosionsgefährdete Konzentration von brennbaren Gasen zu vermeiden.

Beispielsweise kann die erste Dichtung sowie die zweite Dichtung ein im Wesentlichen ringförmiges Volumen zwischen dem Schwimmdach und der Tankwand oberseitig und unterseitig begrenzen. Beispielsweise kann die primäre Dichtung mit dem Gleitblech und mit deren Dichtungsschürze sowie die tertiäre Dichtung mit deren Dichtungsschürze ein im Wesentlichen ringförmiges Volumen zwischen dem Schwimmdach und der Tankwand oberseitig und unterseitig begrenzen. Das Schwimmdach begrenzt dieses Volumen radial innen und die Tankwand sowie gegebenenfalls dort anliegende Dichtungsteile, wie das Gleitblech, das Volumen radial außen. Das System kann dazu ausgebildet sein, dort Gas abzusaugen. Die erste Dichtung kann entsprechend beispielsweise durch die primäre Dichtung und die zweite Dichtung durch die tertiäre Dichtung ausgebildet sein.

Beispielsweise kann das System eine obere mehrere Anschlüsse in der Dichtungsschürze aufweisen. Diese Anschlüsse können in Umfangsrichtung gleichmäßig voneinander beabstandet sein. Beispielsweise können vier oder acht solcher Anschlüsse vorgesehen sein. Daran kann die Gasübertragungsvorrichtung jeweils mit Rohrleitungen und/oder Schläuchen angeschlossen sein. Diese Rohrleitungen können mit der Kupplung auf dem Schwimmdach verbunden sein, in welcher optional die Drainage vorgesehen ist. Von dort kann dann das Gas entlang der Brücke zu der Oberkante des Öltanks mit einem verformbaren Abschnitt geführt werden. Alternativ kann der Anschluss auch beispielsweise über das Schwimmdach erfolgen. Dafür können darin Durchgangsöffnungen vorgesehen sein, welche zwischen der ersten und zweiten Dichtung münden. So können die flüchtigen Bestandteile des Öls bereits zu einem großen Teil abgesaugt werden, bevor das an der Innenwand der Tankwand anhaftende Öl durch ein Entleeren des Öltanks komplett freigelegt wird und frei in die Atmosphäre abgasen kann. Dadurch können gasförmige Emissionen des Gastanks wesentlich reduziert werden, da diese durch Befahrung hervorgerufenen Emissionen gemäß Messungen und je nach Ölsorte ca. 70% der gasförmigen Emissionen verursachen können. Aufgrund der geringen Abfallgeschwindigkeit des Füllpegels von ca. 60 bis 100 cm je Stunde bei der Entleerung und damit korrespondierender Geschwindigkeit des Schwimmdachs kann zwischen jeweiligen Dichtungen bereits eine starke Ausgasung erfolgen.

In einer der Dichtungen und/oder dem Schwimmdach können Zugänge für einen Druckausgleich angeordnet sein, beispielsweise in der tertiären Dichtung. Dadurch kann ein Druckausgleich erfolgen, um eine Erzeugung eines Unterdrucks oder zumindest eines zu hohen Unterdrucks durch das Absaugen zu vermeiden. Die Zugänge können beispielsweise als offene Rohrstutzen ausgebildet sein. An den Zugängen und/oder an den Anschlüssen können Sperrventile vorgesehen sein, um bei einem defekt oder einer Deaktivierung das Volumen besser gegen einen Austritt von Gas abzudichten.

In einer Ausführungsform ist es vorgesehen, dass das durch den Öltank begrenzte Volumen als ein Innenraum des Öltanks ausgebildet ist, welcher für die Lagerung von Öl ausgebildet ist. Der Innenraum kann im Wesentlichen durch das Schwimmdach und die Tankwand begrenzt sein. Der Innenraum kann ein Öllagerraum des Öltanks sein. Der Innenraum weist üblicherweise keinen Freiraum auf, an welchem ein Ausgasen aus dem Öl in einem maßgeblichen Maßstab erfolgen kann. Allerdings kann bei dem eingefüllten Öl beispielsweise Gasblasen enthalten sein oder solche Gasblasen durch einen geringen Druck in einem oberen Bereich des Öltanks entstehen. Diese können beim Einfüllen des Öls weiter nach oben steigen und aus dem Tank entweichen. Die Absaugung kann diese Emissionen reduzieren oder verhindern. Beispielsweise kann die Absaugung an einer Entlüftung an dem Schwimmdach angeschlossen sein. Auch für den Innenraum können Zugänge für einen Druckausgleich angeordnet sein.

Das System kann auch dazu ausgebildet sein, dass sowohl aus dem Volumen zwischen der ersten und zweiten Dichtung als auch aus dem Innenraum des Öltanks eine Absaugung erfolgt. Dann kann die Gasübertragungsvorrichtung beispielsweise mit der Entlüftung und der zweiten Dichtung zur Gasabsaugung verbunden sein. Dafür können jeweilige Absaugleitungen vorgesehen werden, welche mit einer gemeinsamen Kupplung auf dem Schwimmdach verbunden sind. Beispielsweise kann eine selektive Steuerung erfolgen und beim Befüllen nur aus dem Innenraum abgesaugt werden und beim Entleeren nur aus dem Volumen zwischen der ersten und der zweiten Dichtung. Dann kann die Pumpvorrichtung für eine geringe Leistung ausgelegt sein. Zudem können Leckagen von Gas reduziert werden, indem beispielsweise ungenutzte Absaugöffnungen verschlossen werden.

In einer Ausführungsform ist es vorgesehen, dass die Gasabsaugung über einen Flüssigkeitsabscheider in dem Schwimmdach erfolgt, insbesondere die Gasabsaugung aus dem Innenraum des Öltanks. Der Flüssigkeitsabscheider kann eine Entlüftung für den Öltank bilden. Der Flüssigkeitsabscheider kann zur Abscheidung von durch eine schwallartige Gasströmung mitgerissener Flüssigkeit dienen, beispielsweise durch in dem Öltank aufsteigende Gasblasen. Dadurch kann ein Eintritt von Öl, insbesondere mit hoher Geschwindigkeit und/oder in großen Mengen, in die Absaugung verhindert werden. Zudem sind keine separaten Anschlüsse vorzusehen, welche dann gegen solches mitgerissenes Öl gegebenenfalls abzusichern sind.

In einer Ausführungsform ist es vorgesehen, dass das System eine Anschaltvorrichtung aufweist. Die Anschaltvorrichtung kann als Teil der Steuervorrichtung ausgebildet sein. Die Anschaltvorrichtung kann dazu ausgebildet sein, bei einer oder mehreren Bedingungen die Absaugung der Gase aus dem durch den Öltank begrenzten Volumen zu aktivieren. Es kann auch nur eine selektive Aktivierung für ein ausgewähltes Volumen eines Öltanks erfolgen, sofern aus zwei Volumen abgesaugt werden kann. Auch eine selektive Aktivierung nur für solche Öltanks, bei welchen die jeweiligen Bedingungen erfüllt sind, kann vorgesehen sein, sofern das System für die Absaugung mit mehreren Öltanks verbunden ist. Die Anschaltvorrichtung kann beispielsweise Relais und/oder Mikrocontroller aufweisen.

Die Anschaltvorrichtung kann die Absaugung aktivieren, wenn der Öltank befüllt wird. Die Befüllung kann sensorisch detektiert werden oder die Aktivierung der Befüllung selbst kann auch die Absaugung aktivieren. Die Absaugung kann nur für solche Öltanks aktiviert werden, welche befüllt werden. Es können auch nur die Absaugung für bestimmte Volumen in Abhängigkeit von der Befüllung aktiviert werden. Beispielsweise kann nur die Absaugung aus dem Innenraum des Öltanks aktiviert werden.

Die Anschaltvorrichtung kann die Absaugung aktivieren, wenn der Öltank entleert wird. Die Entleerung kann sensorisch detektiert werden oder die Aktivierung der Entleerung selbst kann auch die Absaugung aktivieren. Die Absaugung kann nur für solche Öltanks aktiviert werden, welche entleert werden. Es können auch nur die Absaugung für bestimmte Volumen in Abhängigkeit von der Entleerung aktiviert werden. Beispielsweise kann nur die Absaugung aus dem Volumen zwischen der ersten und der zweiten Dichtung aktiviert werden.

Die Anschaltvorrichtung kann die Absaugung bei einer erfassten Konzentration einer vorbestimmten Art von Gas in dem durch den Öltank begrenzten Volumen, welche größer als ein erster Schwellwert ist, aktiviert werden. Die Konzentration kann sensorisch detektiert werden, beispielsweise in dem jeweiligen Volumen oder auch vor der Mischvorrichtung, in der Pumpvorrichtung und/oder der Filtervorrichtung. Die Art von Gas kann eines, mehrere oder alle brennbaren Gase sein, welche aus dem Öl entweichen kann. Die Absaugung kann nur für solche Volumen und/oder Öltanks aktiviert werden, in welchen eine Überschreitung des ersten Schwellwerts durch die Konzentration detektiert wird. Der erste Schwellwert kann beispielsweise 50% der unteren Explosionsgrenze betragen. Sofern die Absaugung keine Absenkung unter den ersten oder noch einen höheren Schwellwert innerhalb einer vorbestimmten Zeit erreicht, kann ein Alarm ausgegeben werden. So kann eine Funktionsfähigkeit überwacht werden und vor zu hohen Gaskonzentrationen gewarnt werden. Zudem kann dann auch die Absaugung deaktiviert werden, um mögliche Beschädigungen bei einem Defekt zu vermeiden.

Die Anschaltvorrichtung kann die Absaugung in periodischen Zeitintervallen aktivieren. Beispielsweise kann die Absaugung alle 10 min., stündlich oder jeden Tag aktiviert werden. Die Aktivierung kann für eine vorbestimmte Zeitdauer aktiviert werden. Das Zeitintervall kann fest vorgegeben sein oder in Abhängigkeit eines Füllstands des Öltanks und/oder einer gelagerten Ölsorte vorgegeben werden. Damit können Gasemissionen mit geringem Energieaufwand stark reduziert werden. Zudem kann so die Funktionsfähigkeit geprüft werden und eine Zuleitung von Gas zu den jeweiligen Konzentrationssensoren für eine korrekte Erfassung sichergestellt werden.

In einer Ausführungsform ist es vorgesehen, dass das System eine Ausschaltvorrichtung aufweist. Die Ausschaltvorrichtung kann als Teil der Steuervorrichtung ausgebildet sein. Die Ausschaltvorrichtung kann dazu ausgebildet sein, bei einer oder mehreren Bedingungen die Absaugung der Gase aus dem durch den Öltank begrenzten Volumen zu deaktivieren. Es kann auch nur eine selektive Deaktivierung für ein ausgewähltes Volumen eines Öltanks erfolgen, sofern aus zwei Volumen abgesaugt werden kann. Auch eine selektive Deaktivierung nur für solche Öltanks, bei welchen die jeweiligen Bedingungen erfüllt sind, kann vorgesehen sein, sofern das System für die Absaugung mit mehreren Öltanks verbunden ist. Die Ausschaltvorrichtung kann beispielsweise Relais und/oder Mikrocontroller aufweisen.

Beispielsweise kann die Absaugung bei einem detektierten Defekt, beispielsweise des Öltanks und/oder des Systems, deaktiviert werden. Dadurch kann beispielsweise ein Brandrisiko reduziert werden, welches größere Umweltfolgen verursachen kann als eine zwischenzeitlich erhöhte Gasemission.

Beispielsweise kann die Absaugung bei einem konstanten Füllstands des Öltanks deaktiviert werden, also wenn beispielsweise kein Befüllen und/oder Entleeren erfolgt. Dadurch kann ein Energieverbrauch erheblich gesenkt werden, da bei konstantem Füllstand nur sehr geringe Gasemissionen auftreten können. Es kann aber beispielsweise auch nur die Absaugung aus dem Volumen zwischen der ersten und der zweiten Dichtung deaktiviert werden, sofern der Füllstand des Öltanks nicht fällt. Dann ist dort nur mit geringen Gasemissionen zu rechnen. Es kann aber beispielsweise auch nur die Absaugung aus dem Innenraum des Öltanks deaktiviert werden, sofern der Füllstand des Öltanks nicht steigt. Dann ist dort ebenfalls nur mit geringen Gasemissionen zu rechnen.

Die Ausschaltvorrichtung kann die Absaugung bei einer erfassten Konzentration einer vorbestimmten Art von Gas in dem durch den Öltank begrenzten Volumen, welche kleiner als ein zweiter Schwellwert ist, deaktiviert werden. Der zweite Schwellwert kann kleiner als der erste Schwellwert sein. Die Absaugung kann nur für solche Volumen und/oder Öltanks deaktiviert werden, in welchen eine Unterschreitung des zweiten Schwellwerts durch die Konzentration detektiert wird. Der zweite Schwellwert kann beispielsweise 10% oder 20% der unteren Explosionsgrenze betragen.

Die Ausschaltvorrichtung kann die Absaugung nach Ablauf einer bestimmten Aktivierungszeit deaktivieren. Beispielsweise kann die Absaugung nach einer Stunde oder einem Tag Laufzeit deaktiviert werden. Die Aktivierungszeit kann fest vorgegeben sein oder in Abhängigkeit eines Füllstands des Öltanks und/oder einer gelagerten Ölsorte vorgegeben werden. Damit kann ein übermäßiger Energieverbrauch aufgrund einer zu langen Laufzeit und/oder aufgrund von Fehlern in jeweiligen Sensoren vermieden werden.

### Kurze Beschreibung der Figuren

- Fig. 1: veranschaulicht in einer schematischen Perspektivansicht ein System zur Reduktion von gasförmigen Emissionen bei einem Öltank mit einem Schwimmdach und einer Tankwand.

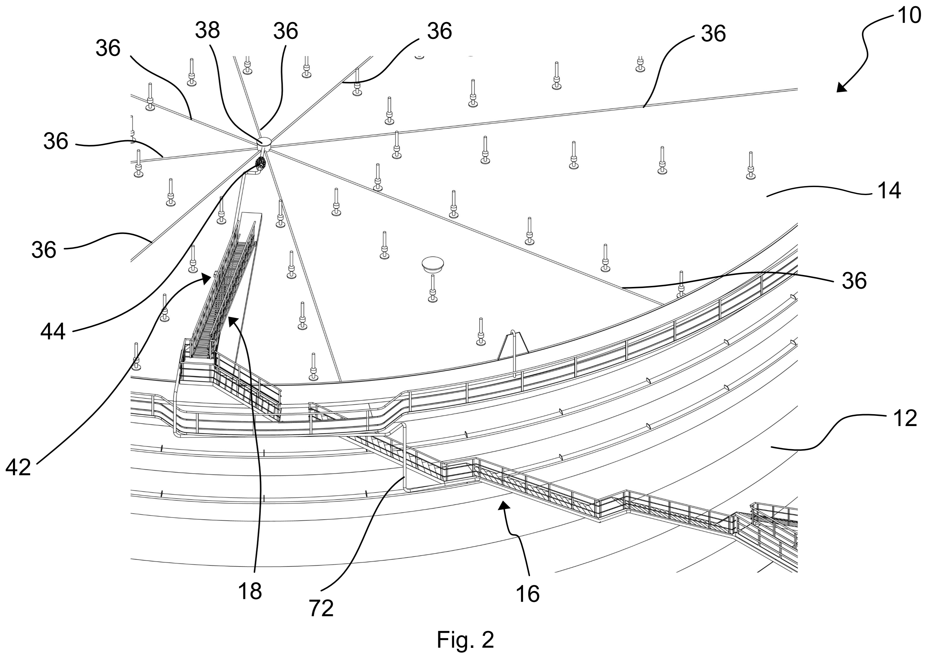

- Fig. 2: veranschaulicht in einer schematischen Perspektivansicht Details eines Zugangs zu dem Schwimmdach und einer Leitungsführung einer Gasübertragungsvorrichtung des Systems.
- Fig. 3: veranschaulicht in einer schematischen Perspektivansicht einen verformbaren Abschnitt der Gasübertragungsvorrichtung, welcher an einer verstellbaren Personenbrücke des Öltanks abgestützt ist.
- Fig. 4: veranschaulicht in einer schematischen Schnittansicht eine Randdichtungsvorrichtung zwischen dem Schwimmdach und der Tankwand.
- Fig. 5: veranschaulicht in einer weiteren schematischen Schnittansicht eine Lage von weiteren Systemkomponenten relativ zu dem Öltank.
- Fig. 6: veranschaulicht in einer schematischen Perspektivansicht die weiteren Systemkomponenten, welche hier eine Pumpvorrichtung mit Mischvorrichtung, eine Filtervorrichtung und eine Feuerlöschvorrichtung sind.
- Fig. 7: veranschaulicht in einer weiteren schematischen Perspektivansicht die Systemkomponenten von Fig. 6.

### Detaillierte Beschreibung von Ausführungsformen

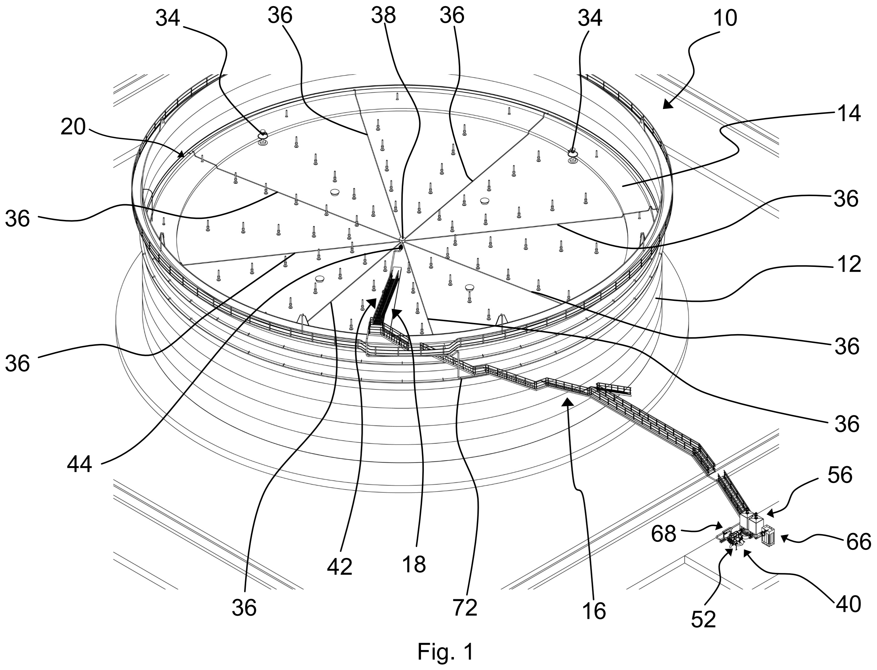

Fig. 1 zeigt ein System zur Reduktion von gasförmigen Emissionen bei wenigstens einem Öltank 10 in einer Perspektivansicht. Der Öltank 10 weist eine zylindrische umlaufende Tankwand 12 mit kreisrunder Grundform auf, welche aus Stahl ausgebildet ist. In der Tankwand 12 ist radial innen ein Schwimmdach 14 aus Stahl angeordnet, welches ab einem Minimalfüllstand auf ein in dem Öltank 10 aufgenommenen Öl mit Schwimmpontons aufschwimmt. Das Schwimmdach 14 bewegt sich also korrespondierend zu einem Füllstand beim Befüllen des Öltanks 10 nach oben und beim Entleeren des Öltanks 10 nach unten. Bei einem maximalen Füllstand ist eine Oberseite des Schwimmdachs 14 immer noch unterhalb einer Oberkante der Tankwand 12 in Hochrichtung angeordnet.

An einer Außenseite der Tankwand 12 ist eine Treppe 16 angeordnet, welche einen Zugang zu der Oberkante der Tankwand 12 ermöglicht. Von der Oberkante erstreckt sich eine als Personenbrücke 18 ausgebildete Brücke nach unten zu der Oberseite des Schwimmdachs 14. Die Personenbrücke 18 ist dabei durch ein Verschwenken verstellbar, um sich an die Position des Schwimmdachs 14 und damit den Füllstand anzupassen. Die Personenbrücke 18 verschwenkt dabei um eine sich im Wesentlichen horizontal erstreckende Achse an der Oberkante der Tankwand 12 und rollt dabei auf der Oberseite des Schwimmdachs 14 ab.

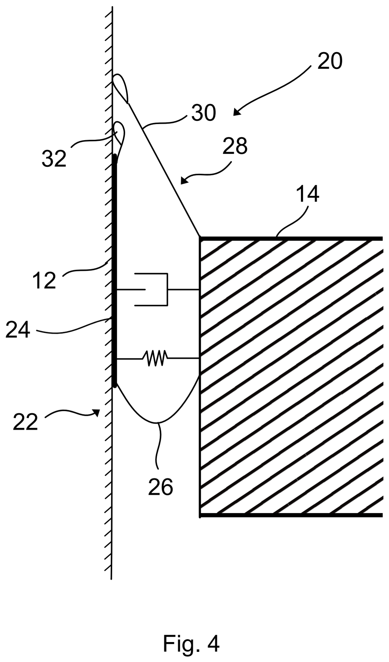

Fig. 4 veranschaulicht in einer Schnittansicht eine Randdichtungsvorrichtung 20 zwischen dem Schwimmdach 14 und er Tankwand 12. Die Randdichtungsvorrichtung 20 weist eine erste Dichtung 22 auf, welche ein Gleitblech 24 und eine erste Dichtungsschürze 26 aufweist. Das Gleitblech 24 ist radial beweglich an dem Schwimmdach 14 radial außen befestigt und radial nach außen federvorgespannt, um eine Lageabweichung von einer koaxialen Ausrichtung des Schwimmdachs 14 zu der Tankwand 12 zu kompensieren. Das Gleitblech 24 ist ein kreisförmig umlaufender Stahlring mit einer radial außenseitigen Gummibeschichtung, welches an der Tankwand 12 innenseitig anliegt. Zwischen dem Gleitblech 24 und dem Schwimmdach 14 erstreckt sich die umlaufende erste Dichtungsschürze 26, welche aus Gummi gebildet ist und an dem Gleitblech 24 und dem Schwimmdach 14 fixiert ist. Unterhalb des Gleitblechs 24 kann optional ein Wachskratzer angeordnet sein. Die Randdichtungsvorrichtung 20 weist eine zweite Dichtung 28 auf, welche eine zweite Dichtungsschürze 30 aufweist. Die zweite Dichtungsschürze 30 erstreckt sich ebenfalls umlaufend in einem oberen Bereich zwischen dem Schwimmdach 14 und der Tankwand 12. Die zweite Dichtungsschürze 30 ist aus Gummi ausgebildet und liegt innenseitig an der Tankwand 12 an. Dort kann die zweite Dichtungsschürze 30 durch einen umlaufenden Keder verstärkt sein. Die zweite Dichtungsschürze 30 ist in Hochrichtung beabstandet zu der ersten Dichtungsschürze 26 an dem Schwimmdach 14 in einem oberen Bereich befestigt. In Hochrichtung zwischen der ersten Dichtungsschürze 26 und der zweiten Dichtungsschürze 30 ist ein weiteres Dichtelement 32 angeordnet. Das Dichtelement 32 ist beispielsweise in Hochrichtung 10 cm bis 30 cm von der zweiten Dichtungsschürze 30 beabstandet. Das Dichtelement 32 ist in einem oberen Bereich an dem Gleitblech 24 befestigt und erstreckt sich umlaufend an der Tankwand 12 innenseitig anliegend. Das Dichtelement 32 wirkt als eine Art Dichtlippe. Die erste Dichtung 22 wird auch als Primärdichtung bezeichnet, das Dichtelement 32 als Sekundärdichtung und die zweite Dichtung 28 als Tertiärdichtung.

Bei einem Entleeren des Öltanks 10 senkt sich das Schwimmdach 14 ab, wobei die Randdichtungsvorrichtung 20 Öl an der Tankwand 12 innen abstreift. Die Tankwand 12 kann jedoch eine sehr raue Oberfläche aufweisen, beispielsweise aufgrund von Korrosion. Spätestens nach dem Passieren des Dichtelements 32 gelangt noch anhaftendes Öl dabei mit der Luft in Kontakt und beginnt flüchtige Bestandteile auszugasen. Auch die zweite Dichtungsschürze 30 kann oft nicht alles anhaftende Öl abstreifen. Insgesamt werden so durch an der Tankwand 12 anhaftendes Öl gasförmige Emissionen freigesetzt.

Bei einem Befüllen des Öltanks 10 hebt sich das Schwimmdach 14 an. Durch das Einleiten und einer Druckdifferenz über die Höhe in dem Öltank 10 kann Gas in einen Innenraum des Öltanks 10 gelangen, in welchem das Öl gelagert wird. Dieser kann über Entlüftungen 34 in dem Schwimmdach 14 abgeleitet werden. Die Entlüftungen 34 weisen dabei Flüssigkeitsabscheider auf, um mitgerissenes Öl in dem Innenraum des Öltanks 10 zurückzuhalten. An der Entlüftung 34 treten dann aber trotzdem gasförmige Emissionen auf.

Das System zur Reduktion der gasförmigen Emissionen ist dazu ausgebildet, Gase aus einem durch den Öltank 10 begrenzten Volumen wenigstens zu einem Teil abzusaugen, bevor das Gas in die Umwelt entweichen kann.

Dazu weist das System eine Gasübertragungsvorrichtung auf. In der gezeigten Ausführungsform ist die Gasübertragungsvorrichtung mit Leitungen an acht in Umfangsrichtung gleichmäßig beabstandeten Positionen mit dem in der Randdichtungsvorrichtung 20 unterseitig durch die erste Dichtungsschürze 26, oberseitig durch die zweite Dichtungsschürze 30, radial außen durch die Tankwand 12 und radial innenseitig durch das Schwimmdach 14 begrenzten ersten Volumen verbunden. Das erste Volumen ist also ein im Wesentlichen ringförmiger Raum, in welchen das durch die Dichtungen an der Tankwand 12 anhaftende und nicht vollständig zurückgehaltene Öl entgast. Die Gase können so dort größtenteils abgesaugt werden, bevor diese in die Umwelt entweichen können. Bei dem Entleeren des Öltanks 10 können die gasförmigen Emissionen so erheblich gesenkt werden. Um einen Unterdruck in dem ersten Volumen zu vermeiden, können optional Zugänge für das Einströmen von Frischluft in dieses Volumen vorgesehen sein.

Für das Absaugen aus dem ersten Volumen sind Absaugöffnungen in der zweiten Dichtungsschürze 30 vorgesehen. Diese sind mit steifen Rohrleitungen 36 verbunden, welche gemeinsam in einer zentralen Kupplung 38 mittig auf dem Schwimmdach 14 münden. Im Bereich von Stufen können diese Rohrleitungen 36 auch flexibel ausgebildet sein, beispielsweise durch Schläuche. Die Kupplung 38 der Gasübertragungsvorrichtung weist eine Drainage auf, welche hier durch eine unterseitige Durchgangsöffnung gebildet ist. Dadurch kann Flüssigkeit entweichen und in eine Drainage der Oberseite des Schwimmdachs 14 eingeleitet werden.

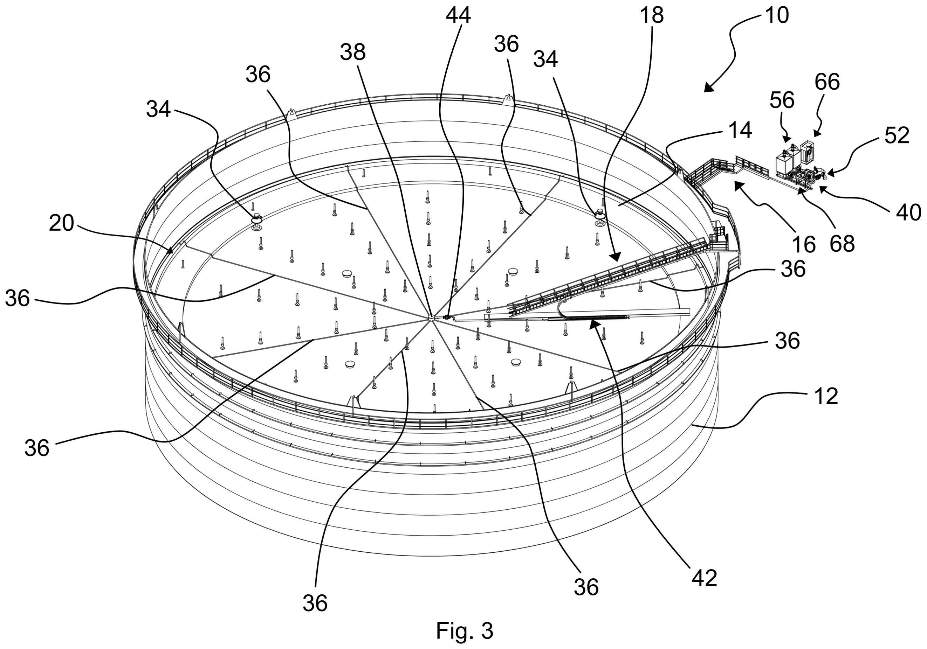

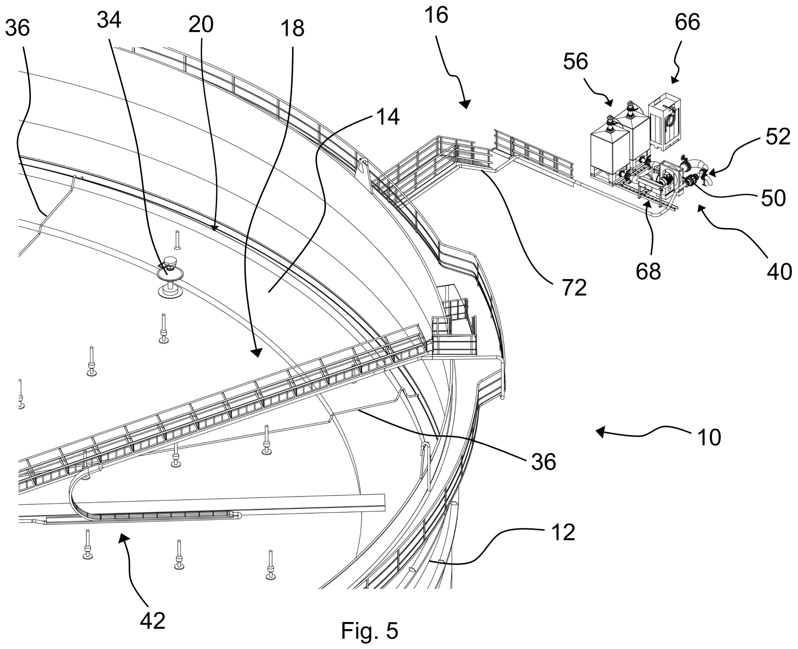

Die Kupplung 38 ist über weitere Leitungen mit einer neben dem Öltank 10 aufgestellten Pumpvorrichtung 40 verbunden. Die Gasübertragungsvorrichtung weist dabei einen verformbaren Abschnitt 42 auf, welcher besonders gut in Fig. 3 und Fig. 5 zu erkennen ist. Der verformbare Abschnitt 42 ist dazu ausgebildet, durch eine Verformung eine Distanzveränderung zwischen einer Oberkante des Öltanks 10, gebildet durch die Oberkante der Tankwand 12, und der Oberseite des Schwimmdachs 14 zu kompensieren. Dazu weist der verformbare Abschnitt 42 einen Schlauch auf, welcher in einer Kette geführt ist. Die Kette ist oberseitig an der Personenbrücke 18 gehalten und legt sich unten je nach Füllstand teilweise auf dem Schwimmdach 14 ab. Der verformbare Abschnitt 42 ist so seitlich geführt. Zwischen der Kupplung 38 und dem verformbaren Abschnitt 42 ist eine Flammendurchschlagsicherung 44 vorgesehen.

Von der Personenbrücke 18 und dem verformbare Abschnitt 42 weist die Gasübertragungsvorrichtung weitere Leitungen 72 auf, welche zu der Pumpvorrichtung 40 geführt sind. Vorliegend sind die Leitungen 72 dabei an der Treppe 16 befestigt, wodurch die Wartung und Installation einfach ist. Alternativ können die Leitungen 72 vollständig oder teilweise an der Außenseite der Tankwand 12 gehalten und zum Boden geführt werden.

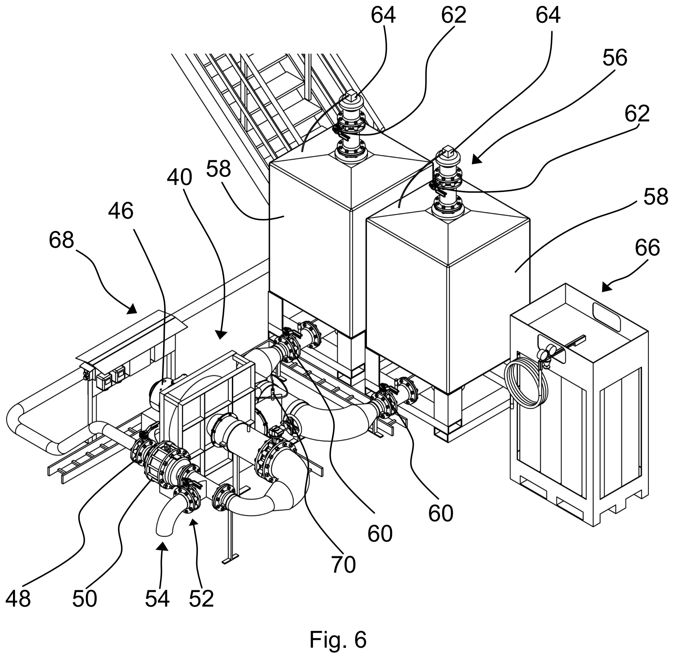

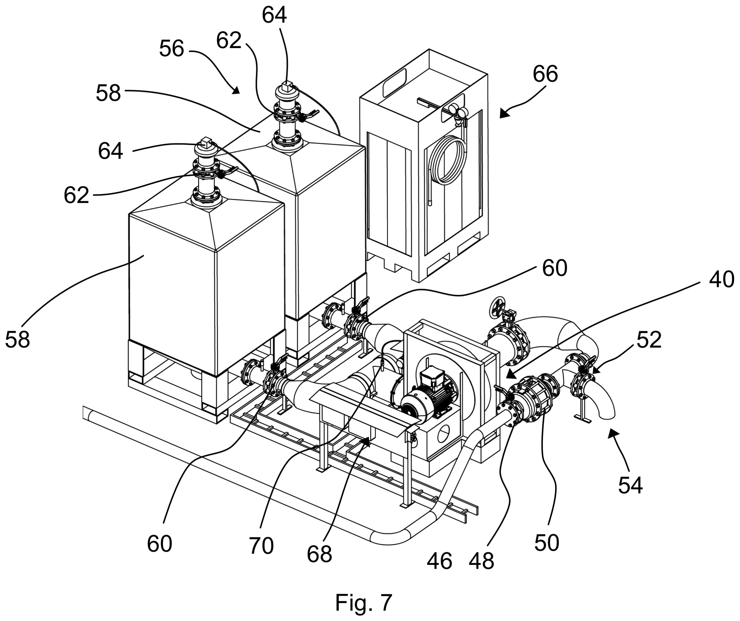

In Fig. 6 und Fig. 7 sind weitere Systemkomponenten zu erkennen. Die Leitungen 72 der Gasübertragungsvorrichtung münden dabei in der Pumpvorrichtung 40. Die Pumpvorrichtung 40 weist eine elektrisch betriebene Pumpe 46 auf, welche den Differenzdruck für das Ansaugen erzeugt. Die Pumpe 46 ist dabei nicht leistungsstark genug, um Öl bei maximal gefülltem Öltank 10 von dem Schwimmdach 14 über die Oberkante des Öltanks 10 heben zu können. Im Gasfluss vor der Pumpe 46 ist ein Schieberventil 48 angeordnet, mit welchem der Volumenstrom für das Absaugen einstellbar ist und mittels welchem die Pumpe 46 von den für die Absaugung vorgesehenen Volumen getrennt werden kann. In Stromrichtung dahinter ist eine weitere Flammendurchschlagsicherung 50 angeordnet.

In Stromrichtung nach der weiteren Flammendurchschlagsicherung 50 und vor der Pumpe 46 ist eine Mischvorrichtung 52 angeordnet. Vorliegend wird diese durch ein manuell einstellbares Ventil und eine Ansaugöffnung 54 von Umgebungsluft ausgebildet. Dadurch kann das abgesaugte Gas mit Luft vermischt werden, eine Konzentration zu erhalten, welche einen vorgegebenen Prozentsatz der unteren Explosionsgrenze beträgt. In Stromrichtung hinter der Mischvorrichtung 52 weist die Pumpvorrichtung 40 eine Sensorvorrichtung 70 auf, welche dazu ausgebildet ist, eine Konzentration von brennbarem Gas zu erfassen. Vorliegend ist dafür ein Sensor in einer Ausgangsleitung hinter der Pumpe 46 vorgesehen. Durch die Mischvorrichtung 52 kann die Menge an beigemischter Umgebungsluft in Abhängigkeit von der erfassten Konzentration von brennbarem Gas eingestellt werden. In anderen Ausführungsformen kann das Ventil der Mischvorrichtung dafür elektronisch einstellbar sein.

Das Gemisch aus abgesaugtem Gas und Umgebungsluft wird anschließend in eine Filtervorrichtung 56 des Systems geleitet. Vorliegend weist die Filtervorrichtung 56 zwei Aktivkohlefilter 58 auf, deren Einlass durch ein Einlassventil 60 und deren Auslass durch ein Auslassventil 62 jeweils verschließbar sind. An dem Auslass ist jeweils ein Sensor 64 einer Detektiervorrichtung, beispielsweise ausgebildet als Rauchsensor oder CO2-Sensor, angeordnet. Dadurch kann ein Filterbrand detektiert werden. Im Brandfall kann die Absaugung deaktiviert werden und/oder die jeweiligen Einlassventile 60 und/oder Auslassventile 62 sowie auch andere Ventile geschlossen werden. Zudem kann der Brand gemeldet werden. Neben der Filtervorrichtung 56 ist eine Löschvorrichtung 66 installiert. Mit der Löschvorrichtung 66 kann im Brandfall die Filtervorrichtung 56 manuell und/oder automatisch gelöscht werden.

In einer weiteren Ausführungsform ist die Gasübertragungsvorrichtung über Leitungen mit dem Innenraum des Öltanks 10 als zweites Volumen verbunden. Dort kann dann ausschließlich oder ergänzt zu dem ersten Volumen abgesaugt werden. Die entsprechenden Leitungen sind in dieser Ausführungsform an den Entlüftungen 34 angebunden und mit der Kupplung 38 verbunden. Optional ist eine Ventilvorrichtung vorgesehen, um einzustellen, aus welchem Volumen abgesaugt wird. Optional weist das Schwimmdach 14 Zugänge für einen Druckausgleich in dem Innenraum auf, welche optional nur bei aktivierter Absaugung geöffnet sind und sonst verschlossen werden können.

Das System weist zudem eine neben der Pumpvorrichtung 40 installierte Steuervorrichtung 68 auf. Die Steuervorrichtung 68 ist für eine Fernsteuerung des Systems von einem Steuerstand aus ausgebildet. Mit der Steuervorrichtung 68 können automatische Steuerungen implementiert sein. Die Steuervorrichtung 68 kann auch für ein Einstellen jeweiliger Ventile und/oder der Pumpe 46 ausgebildet sein, insbesondere auch automatisch in Reaktion auf jeweilige Sensorsignale.

### Bezugszeichen

- 10: Öltank
- 12: Tankwand
- 14: Schwimmdach
- 16: Treppe
- 18: Personenbrücke
- 20: Randdichtungsvorrichtung
- 22: erste Dichtung
- 24: Gleitblech
- 26: erste Dichtungsschürze
- 28: zweite Dichtung
- 30: zweite Dichtungsschürze
- 32: Dichtelement
- 34: Entlüftung
- 36: Rohrleitungen
- 38: Kupplung
- 40: Pumpvorrichtung
- 42: verformbarer Abschnitt
- 44: Flammendurchschlagsicherung
- 46: Pumpe
- 48: Schieberventil
- 50: weitere Flammendurchschlagsicherung
- 52: Mischvorrichtung
- 54: Ansaugöffnung
- 56: Filtervorrichtung
- 58: Aktivkohlefilter
- 60: Einlassventil
- 62: Auslassventil
- 64: Sensor einer Detektiervorrichtung
- 66: Löschvorrichtung
- 68: Steuervorrichtung
- 70: Sensorvorrichtung
- 72: weitere Leitungen

## Patentansprüche

1. System zur Reduktion von gasförmigen Emissionen bei wenigstens einem Öltank (10) mit einem Schwimmdach (14) und einer Tankwand (12),
wobei das System dazu ausgebildet ist, Gase aus einem durch den Öltank (10) begrenzten Volumen abzusaugen.

2. System nach Anspruch 1,
wobei das System eine Pumpvorrichtung (40) aufweist, welche dazu ausgebildet ist, die Gase aus dem durch den Öltank (10) begrenzten Volumen abzusaugen.

3. System nach Anspruch 2,
wobei die Pumpvorrichtung (40) eine Mischvorrichtung (52) aufweist, welche dazu ausgebildet ist, den abgesaugten Gasen Umgebungsluft beizumischen.

4. System nach Anspruch 3,
wobei die Pumpvorrichtung (40) eine Sensorvorrichtung (70) aufweist, welche dazu ausgebildet ist, eine Konzentration von brennbarem Gas zu erfassen,
wobei die Mischvorrichtung (52) dazu ausgebildet ist, eine Menge an beigemischter Umgebungsluft in Abhängigkeit von der erfassten Konzentration von brennbarem Gas einzustellen.

5. System nach einem der vorhergehenden Ansprüche,
wobei das System eine Filtervorrichtung (56) aufweist, welche dazu ausgebildet ist, Gasanteile aus den abgesaugten Gasen zu filtrieren.

6. System nach einem der vorhergehenden Ansprüche,
wobei das System eine Gasübertragungsvorrichtung aufweist, welche mit dem durch den Öltank (10) begrenzten Volumen verbunden ist und dazu ausgebildet ist, das abgesaugte Gas an andere Systemkomponenten zu leiten.

7. System nach einem der vorhergehenden Ansprüche,
wobei die Gasübertragungsvorrichtung eine Drainage für Flüssigkeit aufweist.

8. System nach einem der vorhergehenden Ansprüche,
wobei die Gasübertragungsvorrichtung einen verformbaren Abschnitt (42) aufweist, welcher dazu ausgebildet ist, durch eine Verformung eine Distanzveränderung zwischen einer Oberkante des Öltanks (10) und einer Oberseite des Schwimmdachs (14) zu kompensieren.

9. System nach Anspruch 8,
wobei der verformbare Abschnitt (42) durch eine verstellbare Brücke (18) des Öltanks (10), welche die Oberkante des Öltanks (10) mit der Oberseite des Schwimmdachs (14) verbindet, abgestützt ist.

10. System nach einem der vorhergehenden Ansprüche,
wobei das System dazu ausgebildet ist, gasförmige Emissionen bei wenigstens einem ersten Öltank (10) mit Schwimmdach (14) und einem zweiten Öltank (10) mit Schwimmdach (14) zu reduzieren.

11. System nach einem der vorhergehenden Ansprüche,
wobei der Öltank (10) eine Randdichtungsvorrichtung (20) zwischen dem Schwimmdach (14) und der Tankwand (12) aufweist,
wobei die Randdichtungsvorrichtung (20) wenigstens eine erste Dichtung (22) und eine zweite Dichtung (28) aufweist,
wobei das durch den Öltank (10) begrenzte Volumen zwischen der ersten (22) und der zweiten Dichtung (28) ausgebildet ist.

12. System nach einem der Ansprüche 1 bis 11,
wobei das durch den Öltank (10) begrenzte Volumen als ein Innenraum des Öltanks (10) ausgebildet ist, welcher für die Lagerung von Öl ausgebildet ist.

13. System Anspruch 12,
die Gasabsaugung über einen Flüssigkeitsabscheider in dem Schwimmdach (14) erfolgt.

14. System nach einem der vorhergehenden Ansprüche,
wobei das System eine Anschaltvorrichtung aufweist, welche dazu ausgebildet ist, bei wenigstens einer der folgenden Bedingungen die Absaugung der Gase aus dem durch den Öltank (10) begrenzten Volumen aktiviert:
- Bei einem Befüllen des Öltanks (10);
- Bei einem Entleeren des Öltanks (10);
- Bei einer erfassten Konzentration einer vorbestimmten Art von Gas in dem durch den Öltank (10) begrenzten Volumen, welche größer als ein erster Schwellwert ist; und
- In periodischen Zeitintervallen.

15. System nach einem der vorhergehenden Ansprüche,
wobei das System eine Ausschaltvorrichtung aufweist, welche dazu ausgebildet ist, bei wenigstens einer der folgenden Bedingungen die Absaugung der Gase aus dem durch den Öltank (10) begrenzten Volumen deaktiviert:
- Bei einem detektierten Defekt;
- Bei einem konstanten Füllstand des Öltanks (10);
- Bei einer erfassten Konzentration einer vorbestimmten Art von Gas in dem durch den Öltank (10) begrenzten Volumen, welche kleiner als ein zweiter Schwellwert ist; und
- Nach Ablauf einer bestimmten Aktivierungszeit.
